(19) Europäisches Patentamt

European Patent Office

Office européen des brevets

(11) **EP 1 047 206 A1**

(12) **EUROPEAN PATENT APPLICATION**

(43) Date of publication:
**25.10.2000 Bulletin 2000/43**

(51) Int Cl.$^7$: **H04B 7/00**

(21) Application number: **99440082.8**

(22) Date of filing: **20.04.1999**

(84) Designated Contracting States:
**AT BE CH CY DE DK ES FI FR GB GR IE IT LI LU MC NL PT SE**
Designated Extension States:
**AL LT LV MK RO SI**

(71) Applicant: **ALCATEL**
**75008 Paris (FR)**

(72) Inventors:
• **De Hoz Garcia-Bellido, Alejandro**
**92100 Boulogne-Billancourt (FR)**

• **Cordier, Christophe**
**75017 Paris (FR)**

(74) Representative: **Scheer, Luc et al**
**ALCATEL,**
**Intellectual Property Department,**
**Postfach 300 929**
**70449 Stuttgart (DE)**

(54) **A power control method implemented in a base station of a CDMA type transmission network, and corresponding apparatus and base station**

(57) The invention relates in particular to a power control method implemented in a base station of a CDMA type transmission network, said base station communicating with terminals, the method consisting in allocating a downlink direction power level to each call with a terminal. In the invention, the allocated power level is a function of:

· of the transmission power level

$$( \, ( \widetilde{P_{txi}} )_n \, )$$

requested by the terminal; and
· of a power weighting coefficient:

$$( \, ( P_{total} - ( P_{broadcast} )_n ) \, / \, \sum_{i=1}^{K} ( \widetilde{P_{txi}} )_n \, )$$

that takes account of the power level available and of the transmission power levels requested by all of said terminals.

EP 1 047 206 A1

**Description**

The field of the invention is that of managing the power transmitted by base stations in cellular networks of the code division multiple access (CDMA) type. More precisely, the present invention relates specifically to the power control method that is implemented in a base station of a CDMA type transmission network, the base station communicating with terminals, generally mobile terminals.

In CDMA technology, a plurality of terminals can communicate with the same base station by spreading the transmitted signals by means of different spreading sequences. A power control loop is provided to optimize the powers transmitted from the terminals (uplink direction, from the terminals to the base station) and the powers transmitted from the base station (downlink direction, from the base station to the terminals).

The present invention relates to controlling power in the downlink direction: signals which are transmitted to terminals that are the subject of poor transmission conditions (e.g. terminals that are remote, subject to selective fading, ...) need to be transmitted at higher power than do signals which are transmitted to terminals that benefit from good propagation conditions. To this end, each terminal analyzes the quality of the signals it receives in terms of $Eb/I$, where Eb is energy per bit and I is interference level, and this quality is compared with a reference quality level. As a function of the result of the comparison, a request is transmitted to the base station for an increase or a decrease in the power transmitted by said base station. Such requests are made cyclically, e.g. at time interval periodicity, where a time interval may last 625 µs, for example.

Then, where necessary, the base station corrects the power with which it transmits to the attention of the terminal so that the terminal can benefit from reception of quality close to the reference quality level.

One of the problems posed by controlling power in the downlink direction appears when the base station reaches its maximum power. Under such circumstances, operation of the output amplifier of the base station is saturating, and that reduces the quality of the signals transmitted.

To remedy that drawback, and to anticipate amplifier operation saturating, it is known to establish priorities between the various terminals: either only some of the requests for an increase in power as made by the terminals are satisfied, so terminals whose requests are not satisfied are treated less favorably, or else requests for an increase in transmission power for terminals requesting the largest transmission powers are not satisfied, in which case those are the terminals which are less favored.

Establishing priorities in that way therefore cannot optimize management of the network since it necessarily gives rise to non-uniformity in the treatment of the various terminals, with such non-uniformity being particularly troublesome given that the amount by which the power required by each terminal needs to be increased or decreased is not known with sufficient accuracy: the requests made by the terminals for an increase or a decrease in power are generally of a binary type (a request for increased power causes a logic level 1 to be transmitted whereas a request for a decrease in power causes a logic level 0 (or -1) to be transmitted), which in most cases gives rise to there being a difference between the power required for reaching the reference quality and the signal power actually received (which difference increases with increasing minimum difference or "step size" $\Delta P$ between two transmission levels). That is why any power control based on establishing priorities penalizes some terminals unfairly.

A particular object of the present invention is to remedy those drawbacks.

More precisely, one of the objects of the invention is to provide a method of controlling power in the downlink direction which is not unfavorable to some terminals compared with others, i.e. which treats all of the terminals that are in communication with the base station fairly and equally.

Other objects of the invention are to provide apparatus for implementing the method, and to provide a base station including such apparatus.

These objects, and others that appear below, are achieved by a method in accordance with claim 1 or 14, by apparatus in accordance with claim 7, and by a base station in accordance with claim 13.

Other characteristics and advantages of the invention will appear on reading the following description of a preferred implementation, given by way of non-limiting illustration, and from the accompanying drawings, in which:

- Figure 1 is a block diagram of an embodiment of apparatus of the invention; and
- Figure 2 is a flow chart showing how a particular implementation of the method of the invention takes place.

The invention thus relates to a power control method which is implemented in a base station of a CDMA type transmission network. The base station communicates with terminals by transmitting signals that are spread by different spreading sequences (which are mutually orthogonal or pseudo-orthogonal). In order to enable all of the terminals to receive signals of sufficient quality, quality measurements are performed in each terminal, and a transmission power correction request is transmitted regularly to the base station so that it increases or decreases the power with which it transmits for the attention of the terminal in question.

According to the invention, the power level at which the base station communicates with any terminal is a function not only of the transmission power level requested by the terminal, but also of a power weighting coefficient that takes account of the level of power that is available and of the transmission power levels requested by all of the terminals.

In other words, the invention proposes weighting the power levels allocated to calls with different terminals by means of a common coefficient that takes account of the level of power that is available at the base station and of the transmission power levels requested by all of the terminals. Thus, unlike the state of the art, the terminals are all treated in the same manner concerning the amount of power allocated to each communication downlink, and it is the resource constituted by the power available at the base station that is shared fairly between the various terminals to match the levels they are requesting.

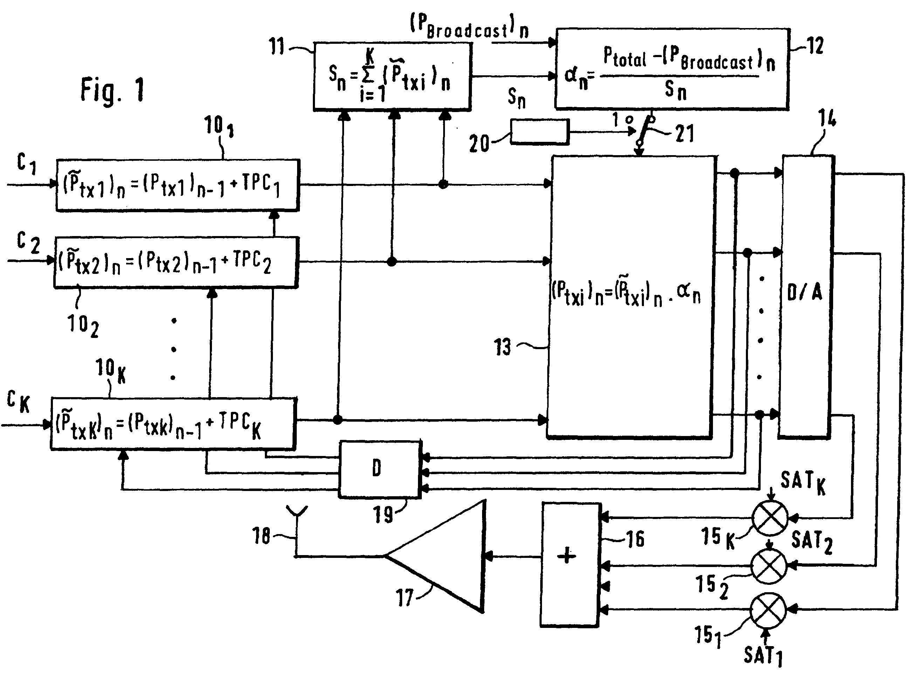

The method of the invention will be better understood on reading the following description of Figure 1 which is a block diagram of an embodiment of apparatus for implementing the method.

The apparatus of Figure 1 is designed to be installed in a base station of a CDMA type transmission network for the purpose of controlling the power with which the base station transmits. It thus includes means for allocating a transmission power level to each downlink direction communication as a function of a request made by a corresponding terminal.

Each request to increase or decrease power is constituted by a bit transmitted by a terminal on the uplink. These bits from K distinct terminals are referenced $C_1$ to $C_K$ in Figure 1. One implementation consists in providing two possible values for each bit: +1 or -1. If the bit is +1, that means the corresponding terminal is requesting an increase in the power of the signals transmitted thereto, while if the bit is -1, that means the corresponding terminal is requesting a decrease in the power of the signals transmitted thereto. The requests for an increase or a decrease in power correspond, for example, to requests for an increase or a decrease of power by 1 dB (predetermined step size value).

The bits $C_1$ to $C_K$ are applied to estimator modules $10_1$ to $10_K$ for estimating the power requested for each transmission in the downlink direction for a duration $\underline{n}$ (where the duration $\underline{n}$ corresponds, for example, to the duration of one time interval, e.g. 625 $\mu$s). The modules $10_1$ to $10_K$ calculate the requested transmission power

$$\widetilde{(P_{txi})}_n$$

for the time interval $\underline{n}$ on the basis of the transmission power $(P_{txi})_{n-1}$ allocated during time interval n-1, with the power being increased or decreased by a coefficient $TPC_i$. This coefficient $TPC_i$ corresponds to the requested increase or decrease in power. It takes account of the above-mentioned step size and the sign of the bit $C_i$ (increase or decrease).

The calculated power information is transmitted to a summing module 11 which calculates a sum $S_n$ equal to:

$$S_n = \sum_{i=1}^{K} \widetilde{(P_{txi})}_n$$

This sum $S_n$ thus corresponds to the transmission power requested from the base station for time interval $\underline{n}$ by all K terminals.

The sum $S_n$ is delivered to a calculation module 12 which, in this case, calculates a power weighting coefficient $\alpha_n$ equal to:

$$\alpha_n = (P_{total} - (P_{broadcast})_n)/S_n$$

where $P_{total}$ is the total transmission power available at the base station and $(P_{broadcast})_n$ is the power allocated to each broadcast channel during time interval $\underline{n}$. The numerator thus represents the level of power available. The purpose of subtracting $(P_{broadcast})_n$ from the total power available is to treat the transmission channels and the broadcast channels differently, as explained below. The broadcast channels may, for example, be the BCCH, the SCH, and the paging channels in the GSM standard.

The power weighting coefficient $\alpha_n$ is applied via a switch 21 to weighting means 13 for weighting the requested transmission power levels

$$\widetilde{(P_{txi})}_n$$

by the coefficient $\alpha_n$. More precisely, each transmission power

$$\overbrace{(P_{txi})}^{\sim}_n$$

requested by a terminal $\underline{i}$ is limited by the coefficient $\alpha_n$ to a power level $(P_{txi})_n$ which is a function not only of the power available for calls proper (i.e. ignoring the power allocated to the broadcast channels), but also of the transmission power levels requested by all of the terminals. In this context, all of the requested power levels are allocated in the same manner and no terminal is favored over another.

The allocated power levels $(P_{txi})_n$ are applied to a digital-to-analog converter 14. During time interval $\underline{n}$, the output levels therefrom are applied to multipliers $15_1$ to $15_K$ which also receive the signals that are to be transmitted $SAT_1$ to $SAT_K$ after they have been spread by different spreading sequences. Amplitude correction is thus implemented by means of the multipliers. The signals whose amplitudes have been corrected are summed in an adder 16, with the resulting sum signal being applied to the output amplifier 17 of the base station, followed by the transmit antenna 18.

The allocated power levels $(P_{txi})_n$ are also applied to a delay unit 19 which delays these levels so that they can be used in the respective estimator modules $10_1$ to $10_K$ for the following time interval, i.e. for time interval n+1. The delay imparted is thus of a duration equal to one time interval, i.e. 625 μs in the present example.

The signals are transmitted in the downlink direction and in the uplink direction in time intervals so as to comply with time synchronization. During each time interval, each terminal notes information concerning the power used in order to estimate the power to be requested of signals transmitted in the following time interval.

As mentioned above, the available power level preferably makes allowance for the power level allocated to the broadcast channels. This makes it possible to guarantee that the power allocated to the broadcast channels is not limited in the event of a limit being applied to the total power allocated to calls with terminals. Under such circumstances, proper optimum reception quality by the terminals is guaranteed for the broadcast channels, which is particularly important since it is these channels that convey information without which the terminals could not communicate.

The available power level $P_{total}$ is advantageously a function of the maximum level of power the amplifier 17 can output without saturating, and is preferably in its linear amplification range. Under such circumstances it is guaranteed that the signals transmitted by the base station are not peak-limited, thereby reducing interference in the network.

The apparatus of the invention preferably comprises activator means 20 for activating the weighting means 13, the weighting means 13 being activated when the sum of the transmission power levels requested by the terminals becomes greater than a threshold value. In accordance with the above, but in non-limiting manner, this threshold value is equal to:

$$P_{total} - (P_{broadcast})_n.$$

The means 20 are designed to control implementation of the method of the invention: if the power available at the base station is sufficient to allocate the powers requested by the terminals to all current calls, then power limitation is not implemented. Under such circumstances, the means 20 activate the switch 21 so that the coefficient $\alpha_n$ as supplied to the weighting means 13 is equal to 1. However, when the value of $\alpha_n$ becomes less than 1, the switch 21 is put into the position shown so that power limitation is obtained.

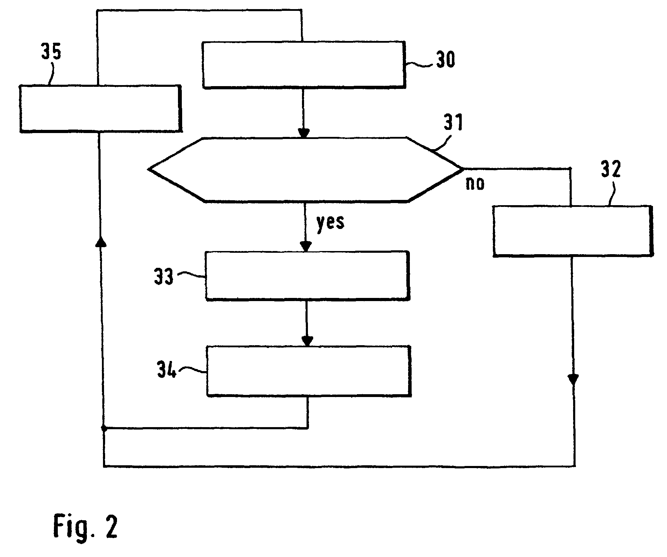

The method of the invention (Figure 2) thus consists in giving each call with a terminal a power level in the downlink direction, said power level being a function:

· of the transmission power level requested by the terminal; and

· of a power weighting coefficient that takes account of the level of power that is available and of the transmission power levels requested by all of the terminals.

The method of the invention can also be seen as consisting, for each terminal, in weighting the requested power level by a coefficient that is less than 1 whenever the sum of the power levels requested by the terminals for transmission in the downlink direction reaches a threshold value. This coefficient that is less than 1 is the above-mentioned coefficient $\alpha_n$, and it preferably makes allowance for the power that is allocated to the broadcast channels.

Figure 2 shows an implementation of the method.

In step 30, downlink direction transmission power level requests are analyzed and summed. This step concerns the processor modules $10_i$, 11, and 12 in Figure 1. At step 31, the sum of the requested power levels is checked against the threshold value (e.g. the value $P_{total} - (P_{broadcast})_n$). If the threshold value is not exceeded (test performed in module 20), then the base station has sufficient power resource available to satisfy demand and all of the requests are satisfied in step 32 (switch 21 in position "1"). If the threshold value is exceeded, then the switch 21 is placed in the position shown in Figure 1 (step 33) and it is weighted by the coefficient $\alpha_n$ (step 34). The method repeats at the end of time interval number n (step 35).

The invention also relates to a base station in a CDMA network that includes apparatus as described above. The elements 16, 17, and 18 of Figure 1 form portions of the base station.

**Claims**

1. A power control method implemented in a base station of a CDMA type transmission network, said base station communicating with terminals, said method consisting in allocating a power level in the downlink direction to each call with a terminal, and being characterized in that said power level is a function:

   · of the transmission power level

   $$(\widetilde{P_{txi}})_n)$$

   requested by the terminal; and
   · of a power weighting coefficient:

   $$((P_{total} - (P_{broadcast})_n) / \sum_{i=1}^{K} (\widetilde{P_{txi}})_n)$$

   that takes account of the power level available and of the transmission power levels requested by all of said terminals.

2. A method according to claim 1, characterized in that said available power level ($P_{total} - (P_{broadcast})_n$) makes allowance for the power level (($P_{broadcast})_n$) allocated to the broadcast channels.

3. A method according to claim 1 or 2, characterized in that said available power level is a function of the maximum power level ($P_{total}$) of the output amplifier (17) of said base station when operating without saturating.

4. A method according to any one of claims 1 to 3, characterized in that said power level allocated to each call in the downlink direction is equal to (($P_{txi})_n$) where:

   $$((P_{txi})_n) = ((\widetilde{P_{txi}})_n) * ((P_{total} - (P_{broadcast})_n) / \sum_{i=1}^{K} (\widetilde{P_{txi}})_n)$$

   where

   $$(\widetilde{P_{txi}})_n)$$

   is said transmission power level requested by terminal i, $P_{total}$ is said maximum power level of the output amplifier of said base station when operating without saturating, (($P_{broadcast})_n$) is said power level allocated to the broadcast channels, and

   $$\sum_{i=1}^{K} (\widetilde{P_{txi}})_n$$

   is the sum of said transmission power levels requested by said terminals.

5. A method according to any one of claims 1 to 4, characterized in that it is implemented when the sum of said transmission power levels requested by said terminals becomes greater than a threshold value $(P_{total}-(P_{broadcast})_n)$.

6. A method according to claims 4 and 5, characterized in that it is implemented when the ratio:

$$( (P_{total}-(P_{broadcast})_n) / \sum_{i=1}^{K} (\widetilde{P_{txi}})_n )$$

is less than 1.

7. Apparatus for controlling the transmission power of a base station in a CDMA type transmission network, said apparatus comprising means for allocating a transmission power level in the downlink direction to each call as a function of a request $(C_i)$ made by a corresponding terminal, and being characterized in that it comprises:

· estimator means (12) for estimating an available power level

$$( (P_{total}-(P_{broadcast})_n) / \sum_{i=1}^{K} (\widetilde{P_{txi}})_n )$$

that takes account of the transmission power levels

$$\sum_{i=1}^{K} (\widetilde{P_{txi}})_n$$

requested by all of the terminals in communication with said base station; and
· weighting means (13) for weighting said transmission power level in the downlink direction by said available power level while taking account of the transmission power levels requested by all of the terminals in communication with said base station.

8. Apparatus according to claim 7, characterized in that said available power level

$$( (P_{total}-(P_{broadcast})_n) / \sum_{i=1}^{K} (\widetilde{P_{txi}})_n )$$

makes allowance for the power level $((P_{broadcast})_n)$ allocated to the broadcast channels.

9. Apparatus according to claim 7 or 8, characterized in that said available power level

$$( (P_{total}-(P_{broadcast})_n) / \sum_{i=1}^{K} (\widetilde{P_{txi}})_n )$$

is a function of the maximum power level of the output amplifier (17) of said base station when operating without saturating.

10. Apparatus according to any one of claims 7 to 9, characterized in that said power level allocated to each call in the downlink direction is equal to $((P_{txi})_n)$ with:

$$( (\widetilde{P_{txi}})_n ) = ( (P_{txi})_n ) * ( (P_{total} - (P_{broadcast})_n ) / \sum_{i=1}^{K} (\widetilde{P_{txi}})_n )$$

where $((P_{txi})_n)$ is said transmission power level requested by terminal i, $P_{total}$ is said maximum power level of the output amplifier (17) of said base station when operating without saturating, $((P_{broadcast})_n)$ is said power level allocated to the broadcast channels, and

$$\sum_{i=1}^{K} (\widetilde{P_{txi}})_n$$

is the sum of said transmission power levels requested by said terminals.

11. Apparatus according to any one of claims 7 to 10, characterized in that it comprises activator means (20) for activating said weighting means (13), said weighting means (13) being activated when the sum of said transmission power levels requested by said terminals exceeds a threshold value.

12. Apparatus according to claims 10 and 11,
characterized in that said weighting means (13) are activated when the ratio:

$$( (P_{total} - (P_{broadcast})_n ) / \sum_{i=1}^{K} (\widetilde{P_{txi}})_n )$$

is less than 1.

13. A base station including apparatus according to any one of claims 7 to 12.

14. A power control method implemented in a base station of a CDMA type transmission network, said base station communicating with terminals, said method consisting in allocating a downlink direction power level to each call with a terminal, which allocated level is a function of the power level requested by said terminal,
the method being characterized in that said power level is weighted by a coefficient ($\alpha_n$) less than 1 when the sum of the power levels requested by said terminals for downlink direction transmission reaches a threshold value.

15. A method according to claim 4, characterized in that said coefficient ($\alpha_n$) is equal to :

$$( (P_{total} - (P_{broadcast})_n ) / \sum_{i=1}^{K} (\widetilde{P_{txi}})_n )$$

where $P_{total}$ is the maximum power level of the output amplifier of said base station when operating without saturating, $((P_{broadcast})_n)$ is the power level allocated to the broadcast channels, and

$$\sum_{i=1}^{K} (\widetilde{P_{txi}})_n$$

is the sum of said transmission power levels requested by said terminals for said downlink direction transmission.

Fig. 1

Fig. 2

**European Patent Office**

## EUROPEAN SEARCH REPORT

Application Number

EP 99 44 0082

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 0 887 947 A (NIPPON ELECTRIC CO) 30 December 1998 (1998-12-30) * page 3, line 25 - page 4, line 54 * | 1,7,14 | H04B7/00 |
| A | EP 0 656 716 A (CSELT CENTRO STUDI LAB TELECOM) 7 June 1995 (1995-06-07) * page 2, line 54 - page 3, line 19 * | 1,7,14 | |
| A | US 5 794 129 A (KOMATSU MASAHIRO) 11 August 1998 (1998-08-11) * column 2, line 64 - column 3, line 24 * | 1,7,14 | |

TECHNICAL FIELDS
SEARCHED (Int.Cl.7)

H04B

The present search report has been drawn up for all claims

| Place of search | Date of completion of the search | Examiner |
|---|---|---|
| THE HAGUE | 1 September 1999 | Dionisi, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 99 44 0082

This annex lists the patent family members relating to the patent documents cited in the above-mentioned European search report.
The members are as contained in the European Patent Office EDP file on
The European Patent Office is in no way liable for these particulars which are merely given for the purpose of information.

01-09-1999

| Patent document cited in search report | | Publication date | Patent family member(s) | | Publication date |
|---|---|---|---|---|---|
| EP  0887947 | A | 30-12-1998 | JP | 11074834 A | 16-03-1999 |
| EP  0656716 | A | 07-06-1995 | IT | 1261365 B | 20-05-1996 |
| | | | DE | 656716 T | 18-01-1996 |
| | | | ES | 2074412 T | 16-09-1995 |
| | | | FI | 945701 A | 03-06-1995 |
| | | | US | 5539728 A | 23-07-1996 |
| US 5794129 | A | 11-08-1998 | JP | 2798012 B | 17-09-1998 |
| | | | JP | 9036801 A | 07-02-1997 |

EPO FORM P0459

For more details about this annex : see Official Journal of the European Patent Office, No. 12/82